# EUROPEAN PATENT SPECIFICATION

(11) **EP 3 738 025 B1**
(45) Date of publication and mention of the grant of the patent: **02.04.2025**
(21) Application number: 19761329.2
(22) Date of filing: 28.02.2019
(51) Int. Cl.: G06F 3/16, G10L 17/00, G06N 3/02, G06N 3/04, G06N 3/044, G10L 15/22, G10L 15/02, G06F 3/01, G06F 3/00

(54) **ELECTRONIC DEVICE AND METHOD FOR CONTROLLING EXTERNAL ELECTRONIC DEVICE BASED ON USE PATTERN INFORMATION CORRESPONDING TO USER**
ELEKTRONISCHE VORRICHTUNG UND VERFAHREN ZUR STEUERUNG EINER EXTERNEN ELEKTRONISCHEN VORRICHTUNG AUF DER GRUNDLAGE VON DEM BENUTZER ENTSPRECHENDEN NUTZUNGSMUSTERINFORMATIONEN
DISPOSITIF ÉLECTRONIQUE ET PROCÉDÉ DE COMMANDE DE DISPOSITIF ÉLECTRONIQUE EXTERNE BASÉ SUR DES INFORMATIONS DE MOTIF D'UTILISATION CORRESPONDANT À UN UTILISATEUR

(30) Priority: 02.03.2018 KR 20180025339
(43) Date of publication of application: 18.11.2020
(73) Proprietor: Samsung Electronics Co., Ltd., Gyeonggi-do 16677 (KR)
(72) Inventor: KIM, Shinho, Suwon-si, Gyeonggi-do 16677 (KR)
(74) Representative: Gulde & Partner
(86) International application number: PCT/KR2019/002431
(87) International publication number: WO 2019/168377

(56) References cited:
- WO-A1-2015/084659
- WO-A1-2017/188801
- US-A1- 2014 330 560
- US-A1- 2017 249 940
- US-A1- 2017 332 035

## Description

### [Technical Field]

The disclosure relates to a method of controlling an external electronic device based on use pattern information corresponding to a user.

### [Background Art]

As the Internet of things (IoT) technology is advanced, the number of IoT devices providing various services is increasing. For example, an IoT device into which the IoT technology has been incorporated may include products related to real life, such as TV, a refrigerator, a washing machine, indoor lamps, an air-conditioning and heating system, and an audio. Publicly used products in addition to personal products may also be included in the IoT devices. Multiple IoT devices may receive a command for performing a specific function and perform a specific function corresponding to the received command.

Multiple IoT devices may be controlled by a specific device (e.g., hub device) and a specific program. Multiple IoT devices may be controlled in response to previous training information based on an artificial neural network (ANN) technology. The ANN technology has a good possibility that it will develop in the near future and may be used in the entire industry. An ANN training algorithm corresponding to the ANN technology may include a recurrent neural network (RNN) algorithm and a convolution neural network (CNN) algorithm. The RNN algorithm may be an algorithm for identifying an operation sequence over time and performing training based on the continuity of corresponding information. The CNN algorithm may be an algorithm for analyzing a static image. Referring to determining a target device for performing a voice command, disclosure "US020170249940A1" discloses systems including multiple computing devices, as well as methods for receiving an audio data from one or more of the computing devices, interpreting the command from the audio data, and determining a target computing device for performing the interpreted command, and disclosure "WO002017188801A1" discloses methods for identifying a voice command of a user, and selecting a device for performing the command by analyzing gesture information.

### [Disclosure of Invention]

### [Technical Problem]

### [Technical Problem]

As the number of IoT devices to which the IoT technology has been applied increases, a process of determining one of multiple IoT devices and delivering a command so that a specific function is performed in the determined IoT device may be difficult.

### [Solution to Problem]

In accordance with various example embodiments, there is provided an electronic device, including a memory, a camera configured to identify a pupil movement of a single user a microphone, a communication module including communication circuitry configured to be connected to one or more external electronic devices, and a processor. wherein the processor is configured corresponding to the appended claims.

Various embodiments of the disclosure may provide a method corresponding to the appended claims.

### [Advantageous Effects of Invention]

Various embodiments of the disclosure may include determining at least one of multiple IoT devices using a voice command and controlling the determined at least one IoT device to perform a specific function. In various embodiments of the disclosure, a user can control at least one IoT device more conveniently by performing the above-described operation based on the ANN algorithm.

In various embodiments of the disclosure, the function of an IoT device desired by a user can be easily controlled based on use pattern information corresponding to the user using data comprising phoneme information obtained using a microphone and audio information stored in a memory for each of the plurality of registered users. If the user is identified as the first user, identifying first use pattern information corresponding to the first user based on a designated artificial neural network, ANN, algorithm corresponding to the plurality of registered users, identifying a first designated electronic device belonging to the one or more external electronic devices and corresponding to the phoneme information based on the identified first use pattern information, and controlling, through a communication module, the first designated electronic device to perform a first designated operation corresponding to the phoneme information. If the user is identified as the second user, identifying second use pattern information corresponding to the second user based on the designated ANN algorithm, identifying a second designated electronic device belonging to the one or more external electronic devices and corresponding to the phoneme information based on the identified second use pattern information, and controlling, through a communication module, the second designated electronic device to perform a second designated operation corresponding to the phoneme information. Wherein the first use pattern information and the second use pattern information comprise at least one of: information on a frequency that each external electronic device is used, information on a time when the external electronic device is used, information on a more used external electronic device if an identical type of external electronic devices are included, information related to a user, information on an external electronic device preferred by the user, and time information and weather information, with respect to the one or more external electronic devices.

### [Advantageous Effects of Invention]

Various embodiments of the disclosure may include determining at least one of multiple IoT devices using a voice command and controlling the determined at least one IoT device to perform a specific function. In various embodiments of the disclosure, a user can control at least one IoT device more conveniently by performing the above-described operation based on the ANN algorithm.

In various embodiments of the disclosure, the function of an IoT device desired by a user can be easily controlled based on use pattern information corresponding to the user using the ANN algorithm. Accordingly, user convenience for control of the IoT device can be improved.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustratinag an electronic device within a network environment according to various embodiments;
FIG. 2 is diagram illustrating the pairing state between an electronic device and the plurality of IoT devices according to various embodiments;
FIG. 3 is a flowchart illustrating an example method of controlling an IoT device in accordance with a voice command according to various embodiments;
FIG. 4 is a flowchart illustrating an example method of controlling an external electronic device based on configuration information corresponding to a user according to various embodiments;
FIG. 5 is a diagram illustrating an example method of controlling an external electronic device based on configuration information corresponding to a user according to various embodiments;
FIG. 6 is a flowchart illustrating an example method of controlling an external electronic device based on voice command and the gaze direction of a pupil according to various embodiments; and
FIG. 7 is an diagram illustrating an example method of controlling an external electronic device based on a voice command and the gaze direction of a pupil according to various embodiments.

### [Mode for the Invention]

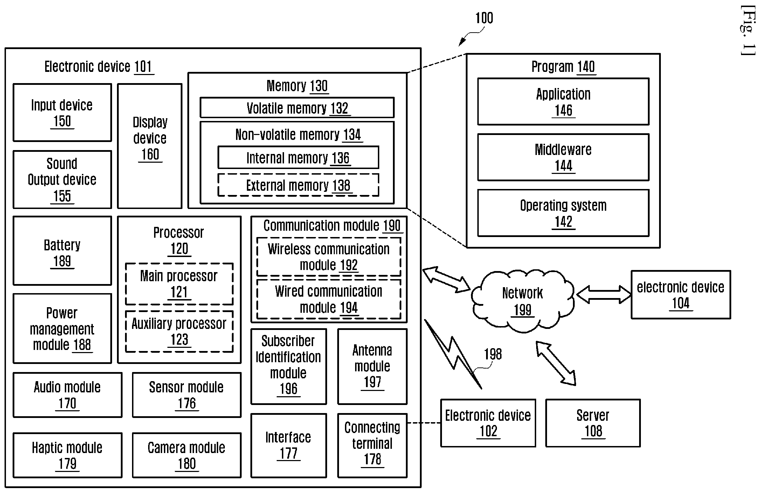

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module (SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector),

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device #01. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include one or more antennas, and, therefrom, at least one antenna appropriate for a communication scheme used in the communication network, such as the first network 198 or the second network 199, may be selected, for example, by the communication module 190 (e.g., the wireless communication module 192). The signal or the power may then be transmitted or received between the communication module 190 and the external electronic device via the selected at least one antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

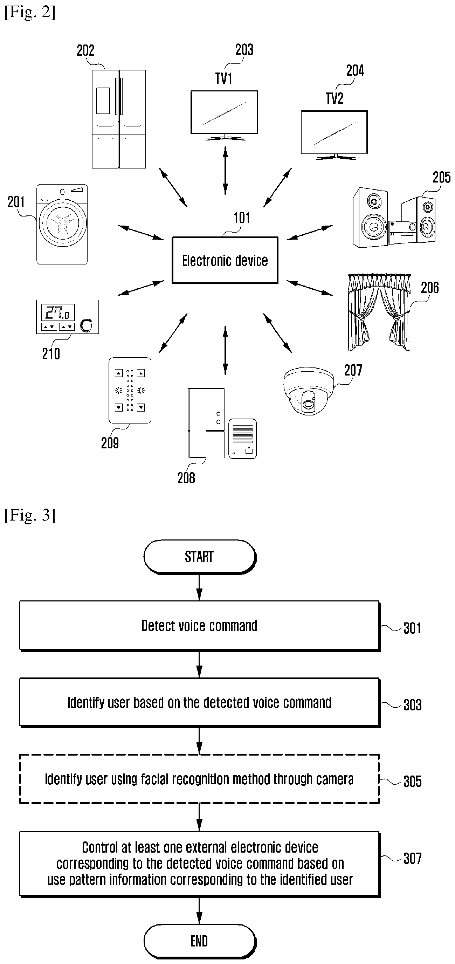

FIG. 2 is a diagram illustrating the pairing state between an electronic device and the plurality of IoT devices according to various embodiments.

Referring to FIG. 2, the electronic device 101 may perform communication with a plurality of IoT devices through a wired communication channel or a wireless communication channel using a communication module which includes, for example, various communication circuitry (e.g., communication module 190 of FIG. 1). The plurality of the IoT devices may include, for example, and without limitation, a washing machine 201, a refrigerator 202, television (e.g., TV1 203 and TV2 204), an audio device 205, a curtain 206 (e.g., automation system capable of opening and shutting a curtain), closed-circuit television (CCTV) 207, an interphone 208, a lighting system 209 and an air-conditioning and heating system 210 (e.g., air-conditioner), for example. The IoT devices may be two or more identical products. Products included the same category may be two or more. For example, the TV (e.g., TV1 203) may be positioned in a living room, and another TV (e.g., TV2 204) may be positioned in a study. The functions of the lighting system 209 and the air-conditioning and heating system 210 may be executed in accordance with at least one room.

In accordance with various embodiments, the electronic device 101 may determine at least one IoT device in response to a user's command, and may control the determined IoT device to perform at least one function. In accordance with various embodiments, in delivering a voice command to an IoT device and processing the command, a user's use pattern (e.g., use pattern information and/or configuration information) may be identified based on the ANN algorithm (e.g., RNN algorithm and/or long short term memory (LSTM) algorithm). For example, the RNN algorithm may refer, for example, to a deep learning model for training data that varies over time like time-series data. The LSTM algorithm may refer, for example, to a deep learning model having a supplemented disadvantage of the RNN algorithm. The LSTM algorithm may refer, for example, to an algorithm capable of retaining trained information for a long period of time by supplementing the RNN algorithm whose trained information may be lost. The electronic device 101 according to various embodiments may identify a user who has delivered a voice command, may identify trained use pattern information (e.g., configuration information) based on identified use pattern information based on the ANN algorithm in accordance with the identified user, and may control at least one IoT device. In accordance with various embodiments, the use pattern information may include information on, for example, and without limitation, the frequency that at least one external electronic device is used, information on the time when the external electronic device was used, information on external electronic device that has been used relatively more frequently with respect to the same type of external electronic devices, information related to the user, information on an external electronic device preferred by the user, time information, weather information, and on the like, based on the user.

FIG. 3 is a flowchart illustrating an example method of controlling an IoT device in accordance with a voice command according to various embodiments.

Referring to FIG. 3, at operation 301, the processor (e.g., processor 120 of FIG. 1) of an electronic device (e.g., electronic device 101 of FIG. 1) may detect a voice command by receiving the voice of a user through a microphone (e.g., input device 150 of FIG. 1). For example, and without limitation, the electronic device 101 may be a hub device configured to manage or control IoT devices and may maintain a pairing state with at least one IoT device. The IoT devices may include electronic products used in real life and related to a personal user, such as, for example, and without limitation, a washing machine, a refrigerator and TV, or the like, and may include electronic products used in real life and publicly used by multiple users.

At operation 303, the processor 120 of the electronic device 101 may identify a user based on the detected voice command. For example, the electronic device 101 may have audio information (e.g., voice frequency information) for the voice of the user already stored in memory (e.g., memory 130 of FIG. 1). The processor 120 may identify a user corresponding to the voice command by comparing the detected voice command with the audio information stored in the memory 130. In accordance with various embodiments, when a voice is received, the processor 120 may analyze and predict the input voice based on the ANN algorithm. The processor 120 may identify whether a specific pattern is repeated in accordance with the input voice through analysis and prediction. When the specific pattern is repeated, the processor 120 may store information on the specific pattern and the frequency of the input voice in the memory 130, and may assign a unique identification (ID). In accordance with various embodiments, when a voice command is detected, the processor 120 may identify a user corresponding to the detected voice command based on information on the specific pattern and the frequency of the voice corresponding to the unique ID.

At operation 305, the processor 120 of the electronic device 101 may identify a user using, for example, a facial recognition method through a camera (e.g., camera module 180 of FIG. 1).

In accordance with various embodiments, the processor 120 may identify a user based on at least one of operation 303 and operation 305. For example, the processor 120 may identify a user based on the voice command detected at operation 303, and may omit operation 305. The processor 120 may omit operation 303, and may identify a user using a facial recognition method through the camera at operation 305. In accordance with various embodiments, in order to precisely identify a user, both operation 303 and operation 305 may be performed, and the sequence that operation 303 and operation 305 are performed may be changed. However, it will be understood that any means of identifying the user may be used.

At operation 307, the processor 120 may control at least one external electronic device (e.g., IoT device), corresponding to the detected voice command, based on the use pattern information (e.g., configuration information) corresponding to the user identified at operation 303 to operation 305. For example, the use pattern information may be determined based on the ANN algorithm (e.g., RNN algorithm and LSTM algorithm). The RNN algorithm may refer, for example, to an ANN model for training data that varies over time like time-series data. The LSTM algorithm may refer, for example, to an ANN model having a supplemented disadvantage of the RNN algorithm. The LSTM algorithm may refer, for example, to an algorithm capable of storing trained information for a long period of time by supplementing the RNN algorithm whose trained information may be lost. The use pattern information may include specific use pattern information corresponding to a specific user. For example, in the case of a first user, first use pattern information (e.g., first configuration information) may be determined in accordance with the first user. In the case of a second user, second use pattern information (e.g., second configuration information) may be determined in accordance with the second user.

In accordance with various embodiments, the use pattern information may include information on the frequency that an IoT device is used, information on the time when an IoT device is used, information on an IoT device that is used more frequently if the same type of IoT devices (e.g., TV1 and TV2) are present, information related to a user (e.g., location, family relation and residence time), information on a function of an IoT device preferred by a user, time information or weather information, with respect to multiple IoT devices.

In accordance with an example embodiment, when a user (e.g., first user) delivers a voice command "Turn off lights in my room and turn on my favorite music", the processor 120 of the electronic device 101 may determine which room corresponds to the user's room based on use pattern information, and may turn off the lights in the user room. Furthermore, the processor 120 may identify the location of the user and determine an IoT device capable of playing back the music at the location of the user. The processor 120 may identify the music preferred by the user based on the use pattern information, and may control the IoT device to play back the music preferred by the user. If a different user (e.g., second user) delivers a voice command, the processor 120 may determine an IoT device, corresponding to the voice command, based on use pattern information corresponding to the different user, and may perform a configured function of the determined IoT device.

In accordance with another embodiment, when a user delivers a voice command "Turn on TV", the processor 120 may identify the location of the user based on use pattern information, and may control TV close to the user to be turned on. The processor 120 may identify the current time and a TV program preferred by the user, based on the use pattern information, and may control the TV to broadcast the preferred TV program.

In accordance with various embodiments, if a new user (e.g., a user not recorded through the ANN algorithm or a nonregistered user) not corresponding to use pattern information delivers a voice command, the processor 120 does not perform the voice command, and may receive a permission for the execution of the voice command from an existing user (e.g., a user recorded through the ANN algorithm or a registered user) through a speaker (e.g., sound output device 155 of FIG. 1) or a display (e.g., display device 160 of FIG. 1). For example, the processor 120 may control an IoT device based on the trained voice command of an existing user based on the ANN algorithm. In accordance with various embodiments, the processor 120 may register a new user under the permission of an existing user. Use pattern information corresponding to a new user may continue to be updated.

In accordance with various embodiments, the processor 120 may continue to update use pattern information corresponding to each of multiple users. For example, when a voice is received, the processor 120 may analyze and predict the input voice based on the ANN algorithm (e.g., RNN algorithm and LSTM algorithm). If a specific pattern is repeated in obtained data through analysis and prediction, the processor 120 may store information on the specific pattern and the frequency of the voice in a server or specific memory, and may assign a unique identification (ID). The processor 120 may identify similarity with existing stored information based on the information on the specific pattern and the frequency of the voice corresponding to the unique ID. If the information on the unique ID is similar to the existing stored information, the processor 120 may update the existing stored information based on the information on the unique ID.

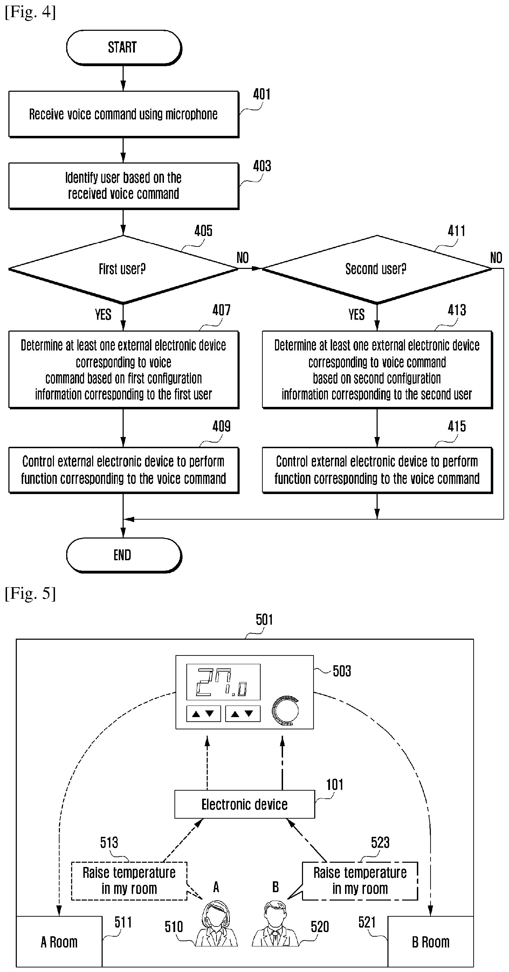

FIG. 4 is a flowchart illustrating an example method of controlling an external electronic device based on configuration information corresponding to a user according to various embodiments.

Referring to FIG. 4, at operation 401, the processor (e.g., processor 120 FIG. 1) of an electronic device (e.g., electronic device 101 of FIG. 1) may receive a user's voice command using a microphone (e.g., input device 150 of FIG. 1).

At operation 403, the processor 120 may identify who the user is based on the received voice command. For example, the processor 120 may identify audio information (e.g., the specific pattern of the voice and frequency information of the voice) on the received voice command. The processor 120 may identify a user corresponding to the voice command by comparing the identified audio information with audio information stored in memory (e.g., memory 130 of FIG. 1).

At operation 405, the processor 120 may identify (determine) whether the user who has delivered the voice command is a first user. When the user is identified (determined) to be the first user, at operation 407, the processor 120 may identify first configuration information corresponding to the first user (e.g., first use pattern information), and may determine at least one external electronic device, corresponding to the voice command, based on the first configuration information.

At operation 409, the processor 120 may control the determined external electronic device to perform a function corresponding to the voice command.

If, at operation 405, the user is not the first user, at operation 411, the processor 120 may identify (determine) whether the user is a second user. If the user is identified (determined) to be the second user, at operation 413, the processor 120 may identify second configuration information corresponding to the second user (e.g., second use pattern information), and may determine at least one external electronic device, corresponding to the voice command, based on the second configuration information.

At operation 415, the processor 120 may control the determined external electronic device to perform a function corresponding to the voice command.

If, at operation 411, the user is not the second user, the processor 120 may ignore the received voice command. In accordance with various embodiments, when audio information to be compared with audio information corresponding to a received voice command is not stored in the memory 130, the processor 120 may store audio information, corresponding to the voice command, in the memory 130 and may assign a unique ID. In accordance with various embodiments, the electronic device 101 may store new audio information in the memory 130 under the control of a user corresponding to an ID previously stored in the memory 130, and may assign a unique ID. For example, when the electronic device 101 assigns a unique ID, it may request permission from a user corresponding to a previously stored ID.

FIG. 5 is a diagram illustrating an example method of controlling an external electronic device based on configuration information corresponding to a user according to various embodiments.

Referring to FIG. 5, the electronic device 101 may receive the voice of at least one user through a microphone (e.g., input device 150 of FIG. 1), and may identify who the user corresponding to the received voice is. For example, the electronic device 101 may identify audio information (e.g., specific pattern and frequency information) on the received voice. The electronic device 101 may identify a user corresponding to the received voice by comparing the identified audio information and audio information stored in memory (e.g., memory 130 of FIG. 1). The electronic device 101 may identify use pattern information, corresponding to the identified user, based on the ANN algorithm, and may control at least one external electronic device (e.g., IoT device) to perform a voice command for the received voice based on the use pattern information.

In accordance with various embodiments, a user A 510 (e.g., first user) and a user B 520 (e.g., second user) may live in the same space 501 (e.g., house). The user A 510 may live in a room A 511 included in the same space 501, and the user B 520 may live in a room B 521 included in the same space 501. An electronic device (e.g., electronic device 101 of FIG. 1) may identify the user A 510 and the user B 520, living in the same space 501, based on the ANN algorithm. For example, the electronic device 101 may have audio information of the user A 510 and audio information of the user B 520 stored in memory (e.g., memory 130 of FIG. 1). Furthermore, the electronic device 101 may store use pattern information, corresponding to the user A 510, and use pattern information, corresponding to the user B 520, in the memory 130. The electronic device 101 may receive the voice of at least one of the user A 510 and the user B 520, and may identify a user corresponding to the voice based on the audio information stored in the memory.

For example, when the user A 510 delivers a voice command 513 "Raise temperature in my room", the electronic device 101 may receive the voice command 513, and may identify that a user corresponding to the voice command 513 is the user A 510. The electronic device 101 may identify the room A 511, that is, the room of the user A 510, based on the use pattern information corresponding to the user A 510. The electronic device 101 may identify information on outside weather and a set temperature preferred by the user A 510 based on the use pattern information. The electronic device 101 may control an air-conditioning and heating system 503 (e.g., air-conditioning and heating system 210 of FIG. 2) to adjust the temperature of the room A 511. In accordance with various embodiments, the electronic device 101 may identify an indoor set temperature, preferred by the user A 510, based on the use pattern information of the user A 510, and may adjust the temperature of the room A 511 based on the identified temperature.

In accordance with various embodiments, when the user B 520 not the user A 510 delivers a voice command, the electronic device 101 may control at least one external electronic device (e.g., air-conditioning and heating system 503) like the above-described example.

For example, when the user B 520 delivers a voice command 523 "Raise temperature in my room", the electronic device 101 may receive the voice command 523, and may identify that a user corresponding to the voice command 523 is the user B 520. The electronic device 101 may identify the room B 521, that is, the room of the user B 520, based on the use pattern information corresponding to the user B 520. The electronic device 101 may control the air-conditioning and heating system 503 (e.g., air-conditioning and heating system 210 of FIG. 2) to adjust the temperature of the room B 521. In accordance with various embodiments, the electronic device 101 may identify an indoor set temperature, preferred by the user B 520, based on the use pattern information of the user B 520, and may adjust the temperature of the room B 521 based on the identified temperature.

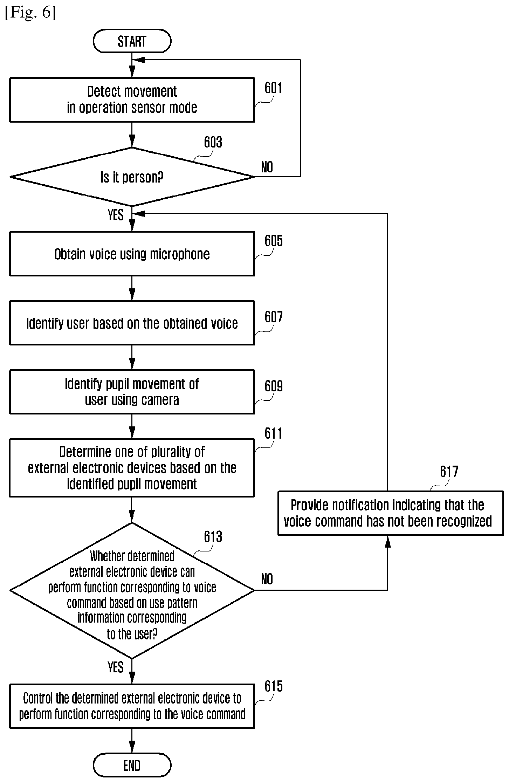

FIG. 6 is a flowchart illustrating an example method of controlling an external electronic device based on voice command and the gaze direction of a pupil according to various embodiments.

Referring to FIG. 6, at operation 601, the processor (e.g., processor 120 of FIG. 1) of an electronic device (e.g., electronic device 101 of FIG. 1) may detect a surrounding movement in an operation sensor mode. The operation sensor mode may be a mode in which the processor 120 of the electronic device 101 detects a moving subject for photography using a sensor module (e.g., sensor module 176 of FIG. 1). The processor 120 of the electronic device 101 may obtain an image of an external object using a camera (e.g., camera module 180 of FIG. 1). In accordance with various embodiments, the processor 120 may obtain an image of an external object in the state in which the camera is always activated, may obtain an image of an external object by activating the camera in the operation sensor mode, or may obtain an image of an external object by activating the camera when it detects a moving subject for photography.

At operation 603, the processor 120 may identify (determine) whether an external object (e.g., subject for photography) is a person based on an obtained image.

If, at operation 603, the external object is identified (determined) to be a person, at operation 605, the processor 120 may obtain a voice from the external object (e.g., person) using a microphone (e.g., input device 150 of FIG. 1).

At operation 607, the processor 120 may identify a user based on the obtained voice. For example, the processor 120 may determine whether the user is an existing registered user or a new user. The processor 120 may identify whether the user is a registered user or a nonregistered user based on audio information stored in the memory 130. Although not shown, when the user is a nonregistered user, the processor 120 may register the nonregistered user under the permission of a registered user.

At operation 609, the processor 120 may identify a pupil movement of the user using a camera (e.g., camera module 180 of FIG. 1). For example, the processor 120 may identify the direction at which the user gazes using the camera.

At operation 611, the processor 120 may determine at least one of a plurality of external electronic devices based on the identified pupil movement. For example, if a plurality of external electronic devices is disposed in the direction at which the user gazes (e.g., coordinates), the processor 120 may group the plurality of external electronic devices. The processor 120 may determine at least one external electronic device capable of performing a function, corresponding to the voice, based on the plurality of grouped external electronic devices.

At operation 613, the processor 120 may determine whether a function corresponding to a voice command may be performed through the determined external electronic device based on use pattern information (e.g., configuration information) corresponding to the user. In accordance with various embodiments, the use pattern information (e.g., configuration information) may be determined in accordance with a specific user and periodically updated based on the ANN algorithm. The processor 120 may determine at least one external electronic device in accordance with a user based on use pattern information, and may control the determined external electronic device to perform a function desired by the user.

At operation 615, the processor 120 may control the determined external electronic device to perform a function corresponding to a voice command.

If, at operation 613, the determined external electronic device does not perform a function corresponding to a voice command, at operation 617, the processor 120 may provide the user with notification using a method, such as an audio signal, light, vibration and message notification in a display. The processor 120 may deliver a message, reading that a voice command has not been recognized, to a user.

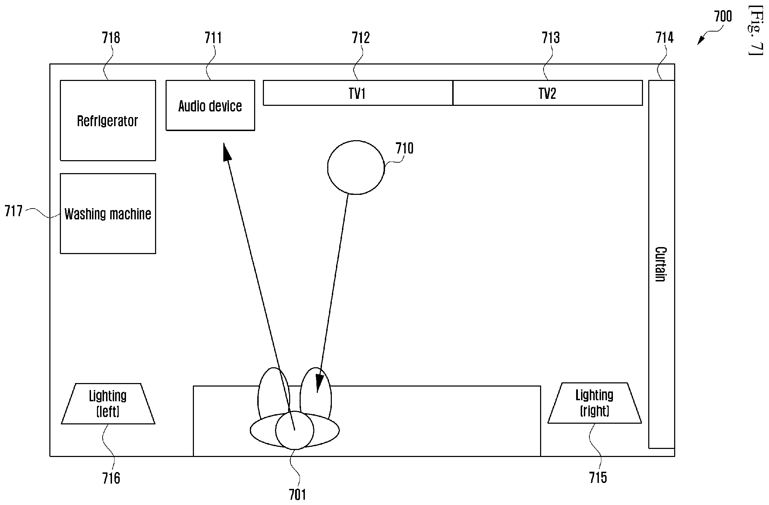

FIG. 7 is a diagram illustrating an example method of controlling an external electronic device based on a voice command and the gaze direction of a pupil according to various embodiments.

FIG. 7 is a plan view of the living space 700 (e.g., house) of a user 701, which is seen from the top. For example, the living space 700 of the user 701 may include an audio device 711 (e.g., audio device 205 of FIG. 2), two sets of TV (e.g., TV1 712 (e.g., TV1 203 of FIG. 2) and TV2 713 (e.g., TV2 204 of FIG. 2)), a curtain 714 (e.g., curtain 206 of FIG. 2), lightings (e.g., lighting(left) 716 and lighting(right) 715), a washing machine 717 (e.g., washing machine 201 of FIG. 2) and a refrigerator 718 (e.g., refrigerator 202 of FIG. 2). The plurality of external electronic devices may be included in IoT devices. Although not shown, the living space 700 may further include multiple IoT devices (e.g., air-conditioning and heating system (e.g., air-conditioning and heating system 210 of FIG. 2)). External electronic devices are not limited to the external electronic devices show in FIG. 7.

Referring to FIG. 7, an electronic device 710 (e.g., electronic device 101 of FIG. 1) has been illustrated as being positioned at the center of the living space 700, but the location of the electronic device 710 is not limited. The electronic device 710 may function as a hub device for managing or controlling multiple external electronic devices (e.g., audio device 711, TV1 712, TV2 713, lightings 715 and 716, washing machine 717 and refrigerator 718), and may be synchronized with at least one external electronic device. The electronic device 710 may determine at least one of synchronized external electronic devices and control the function of the determined external electronic device. For example, the electronic device 710 may control the refrigerator 718 in order to control the refrigeration temperature of the refrigerator 718, and may remotely control the ON/OFF and volume of the audio device 711. The electronic device 710 may include a camera (e.g., camera module 180 of FIG. 1) and photograph a surrounding subject for photography using the camera.

Referring to FIG. 7, the electronic device 710 may track a pupil movement of a user using the camera and identify at least one external electronic device positioned in the direction at which the user gazes based on the pupil movement. The electronic device 710 may predict the user's intention based on the pupil movement of the user and control at least one external electronic device positioned in the direction at which the user gazes.

In accordance with various embodiments, a user may gaze at least one external electronic device corresponding to a voice command while delivering the voice command to the electronic device 710. The electronic device 710 may identify a pupil movement of the user while receiving the voice command through a microphone. The electronic device 710 may predict the direction at which the user gazes and identify at least one external electronic device positioned in the direction at which the user gazes. The electronic device 710 may apply the delivered voice command to the identified external electronic device. The electronic device 710 may remotely control the identified external electronic device to perform a function corresponding to the voice command.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, and/or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" refers to a storage medium that is a tangible device, but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., Play StoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the present disclosure has been illustrated and described with reference to various example embodiments, it will be understood that the various example embodiments are descriptive, and not limiting. One skilled in the art will understand that various modifications, alternatives and changes may be made without departing from and scope of the disclosure as defined, for example, and without limitation, in the appended claims, and their equivalents.

## Claims

1. An electronic device (101, 710), comprising:
a memory (130);
a camera (180) configured to identify a pupil movement of a single user;
a microphone (150);
a communication module (190) comprising communication circuitry configured to be connected to one or more external electronic devices; and
a processor (120), wherein the processor is configured to:
in response to receiving voice data comprising phoneme information obtained using the microphone, identify the single user from a plurality of registered users permitted to control the one or more external electronic devices as a first user or a second user, wherein the single user is identified from the plurality of registered users based at least on the voice data, which comprises the phoneme information obtained using the microphone, and audio information stored in the memory (130) for each of the plurality of registered users;
identify a direction in which the identified single user gazes based on the pupil movement of the single user;
if the single user is identified as the first user:
identify first use pattern information corresponding to the first user based on a designated artificial neural network, ANN, algorithm corresponding to the plurality of registered users,
identify a first designated electronic device, belonging to the one or more external electronic devices and corresponding to the phoneme information based on the identified first use pattern information and the direction in which the first user gazes,
determine, when there are a plurality of the first designated electronic device, the closest electronic device among the plurality of the first designated electronic device based on a position of the first user as the first designated electronic device, and
control, through the communication module, the first designated electronic device to perform a first designated operation corresponding to the phoneme information; and
if the single user is identified as the second user:
identify second use pattern information corresponding to the second user based on the designated ANN algorithm,
identify a second designated electronic device, belonging to the one or more external electronic devices and corresponding to the phoneme information based on, the identified second use pattern information, and the direction in which the second user gazes,
determine, when there are a plurality of the second designated electronic device, the closest electronic device among the plurality of the second designated electronic device based on a position of the second user as the second designated electronic device, and
control, through the communication module, the second designated electronic device to perform a second designated operation corresponding to the phoneme information,
wherein the first use pattern information and the second use pattern information comprise at least one of: information on a frequency on which each external electronic device is used, information on a time when the external electronic device is used, information on a more used external electronic device if an identical type of external electronic devices is included, information related to a user, information on an external electronic device preferred by the user, and time information and weather information with respect to the one or more external electronic devices.

2. The electronic device of claim 1, wherein:
the first use pattern information comprises use pattern information of the first user corresponding to the one or more external electronic devices, and
the second use pattern information comprises use pattern information of the second user corresponding to the one or more external electronic devices.

3. The electronic device of claim 1, wherein:
the first use pattern information comprises use pattern information of the first user to which a weight corresponding to the first user has been applied based on the designated ANN algorithm, and
the second use pattern information comprises use pattern information of the second user to which a weight corresponding to the second user has been applied based on the designated ANN algorithm.

4. The electronic device of claim 1, wherein the processor is configured to:
determine at least one external electronic device, belonging to the one or more external electronic devices and capable of performing the first designated operation, to be the first designated electronic device, and
determine at least one external electronic device different from the first designated electronic device, belonging to the one or more external electronic devices and capable of performing the second designated operation, to be the second designated electronic device.

5. The electronic device of claim 1, wherein the processor is configured to determine the first designated electronic device of a plurality of external electronic devices based at least on the first use pattern information and to determine the second designated electronic device of the plurality of external electronic devices based at least on the second use pattern information, based on the plurality of external electronic devices of the one or more external electronic devices corresponding to the first designated operation or the second designated operation.

6. The electronic device of claim 1, wherein the first designated operation and the second designated operation perform a same function.

7. The electronic device of claim 1, wherein the processor is configured to provide a notification for identifying whether the user's control of the one or more external electronic devices has been permitted based on the user not belonging to one of the first user and the second user.

8. A method, comprising:
in response to receiving voice data comprising phoneme information obtained using the microphone, identifying a single user from a plurality of registered users permitted to control the one or more external electronic devices as a first user or a second user, wherein the single user is identified from the plurality of registered users based at least on the voice data, which comprises the phoneme information obtained using a microphone, and audio information stored in a memory (130) for each of the plurality of registered users;
identifying a direction in which the identified single user gazes based on a pupil movement of the single user;
if the single user is identified as the first user:
identifying first use pattern information corresponding to the first user based on a designated artificial neural network, ANN, algorithm corresponding to the plurality of registered users;
identifying a first designated electronic device belonging to the one or more external electronic devices and corresponding to the phoneme information based on the identified first use pattern information, and the direction in which the first user gazes;
determining, when there are a plurality of the first designated electronic device, the closest electronic device among the plurality of the first designated electronic device based on a position of the first user as the first designated electronic device; and
controlling, through a communication module, the first designated electronic device to perform a first designated operation corresponding to the phoneme information, and
if the single user is identified as the second user:
identifying second use pattern information corresponding to the second user based on the designated ANN algorithm;
identifying a second designated electronic device belonging to the one or more external electronic devices and corresponding to the phoneme information based on the identified second use pattern information, and the direction in which the second user gazes;
determining, when there are a plurality of the second designated electronic device, the closest electronic device among the plurality of the second designated electronic device based on a position of the second user as the second designated electronic device; and
controlling, through a communication module, the second designated electronic device to perform a second designated operation corresponding to the phoneme information,
wherein the first use pattern information and the second use pattern information comprise at least one of: information on a frequency on which each external electronic device is used, information on a time when the external electronic device is used, information on a more used external electronic device if an identical type of external electronic devices is included, information related to a user, information on an external electronic device preferred by the user, and time information and weather information with respect to the one or more external electronic devices.

9. The method of claim 8, further comprising:
determining at least one external electronic device belonging to the one or more external electronic devices and capable of performing the first designated operation to be the first designated electronic device; and
determining at least one external electronic device different from the first external device, belonging to the one or more external electronic devices and capable of performing the second designated operation, to be the second designated electronic device.

10. The method of claim 8, further comprising:
based on a plurality of external electronic devices of the one or more external electronic devices corresponding to the first designated operation or the second designated operation,
determining the first designated electronic device of the plurality of external electronic devices based at least on the first use pattern information, and
determining the second designated electronic device of the plurality of external electronic devices based at least on the second use pattern information.

11. The method of claim 8, wherein the first designated operation and the second designated operation perform a same function.

12. The method of claim 8, further comprising providing a notification for identifying whether control of the one or more external electronic devices corresponding to the user is permitted based on the user not belonging to the first user and/or the second user.

## Patentansprüche

1. Elektronische Vorrichtung (101, 710), umfassend:
einen Speicher (130);
eine Kamera (180), die konfiguriert ist, um eine Pupillenbewegung eines einzelnen Benutzers zu identifizieren;
ein Mikrofon (150);
ein Kommunikationsmodul (190), das eine Kommunikationsschaltung umfasst, die konfiguriert ist, um mit einer oder mehreren externen elektronischen Vorrichtungen verbunden zu werden; und
einen Prozessor (120), wobei der Prozessor konfiguriert ist zum:
als Reaktion auf das Empfangen von Sprachdaten, die unter Verwendung des Mikrofons erhaltene Phoneminformationen umfassen, Identifizieren des einzelnen Benutzers aus einer Vielzahl von registrierten Benutzern, denen es gestattet ist, die eine oder die mehreren externen elektronischen Vorrichtungen zu steuern, als einen ersten Benutzer oder einen zweiten Benutzer, wobei der einzelne Benutzer aus der Vielzahl von registrierten Benutzern basierend zumindest auf den Sprachdaten, die die unter Verwendung des Mikrofons erhaltenen Phoneminformationen umfassen, und in dem Speicher (130) gespeicherten Audioinformationen für jeden der Vielzahl von registrierten Benutzern identifiziert wird;
Identifizieren einer Richtung, in die der identifizierte einzelne Benutzer blickt, basierend auf der Pupillenbewegung des einzelnen Benutzers;
wenn der einzelne Benutzer als der erste Benutzer identifiziert wird:
Identifizieren erster Nutzungsmusterinformationen, die dem ersten Benutzer entsprechen, basierend auf einem bestimmten Algorithmus eines künstlichen neuronalen Netzwerkes, ANN, der der Vielzahl von registrierten Benutzern entspricht,
Identifizieren einer ersten bestimmten elektronischen Vorrichtung, die zu der einen oder den mehreren externen elektronischen Vorrichtungen gehört und den Phoneminformationen entspricht, basierend auf den identifizierten ersten Nutzungsmusterinformationen und der Richtung, in die der erste Benutzer blickt,
Bestimmen, wenn es eine Vielzahl der ersten bestimmten elektronischen Vorrichtung gibt, der nächstgelegenen elektronischen Vorrichtung unter der Vielzahl der ersten bestimmten elektronischen Vorrichtung basierend auf einer Position des ersten Benutzers als die erste bestimmte elektronische Vorrichtung, und
Steuern, über das Kommunikationsmodul, der ersten bestimmten elektronischen Vorrichtung, um einen ersten bestimmten Vorgang entsprechend den Phoneminformationen durchzuführen; und
wenn der einzelne Benutzer als der zweite Benutzer identifiziert wird:
Identifizieren zweiter Nutzungsmusterinformationen, die dem zweiten Benutzer entsprechen, basierend auf dem bestimmten ANN-Algorithmus,
Identifizieren einer zweiten bestimmten elektronischen Vorrichtung, die zu der einen oder den mehreren externen elektronischen Vorrichtungen gehört und den Phoneminformationen entspricht, basierend auf den identifizierten zweiten Nutzungsmusterinformationen und der Richtung, in die der zweite Benutzer blickt,
Bestimmen, wenn es eine Vielzahl der zweiten bestimmten elektronischen Vorrichtung gibt, der nächstgelegenen elektronischen Vorrichtung unter der Vielzahl der zweiten bestimmten elektronischen Vorrichtung basierend auf einer Position des zweiten Benutzers als die zweite bestimmte elektronische Vorrichtung, und
Steuern, über das Kommunikationsmodul, der zweiten bestimmten elektronischen Vorrichtung, so dass sie einen zweiten bestimmten Vorgang durchführt, der den Phoneminformationen entspricht,
wobei die ersten Nutzungsmusterinformationen und die zweiten Nutzungsmusterinformationen mindestens eines von Folgendem enthalten: Informationen über eine Häufigkeit, mit der jede externe elektronische Vorrichtung benutzt wird, Informationen über eine Zeit, zu der die externe elektronische Vorrichtung benutzt wird, Informationen über eine häufiger benutzte externe elektronische Vorrichtung, wenn ein identischer Typ externer elektronischer Vorrichtungen enthalten ist, Informationen, die sich auf einen Benutzer beziehen, Informationen über eine von dem Benutzer bevorzugte externe elektronische Vorrichtung, und Zeitinformationen und Wetterinformationen in Bezug auf die eine oder die mehreren externen elektronischen Vorrichtungen.

2. Elektronische Vorrichtung nach Anspruch 1, wobei:
die ersten Nutzungsmusterinformationen Nutzungsmusterinformationen des ersten Benutzers umfassen, die der einen oder den mehreren externen elektronischen Vorrichtungen entsprechen, und
die zweiten Nutzungsmusterinformationen Nutzungsmusterinformationen des zweiten Benutzers umfassen, die der einen oder den mehreren externen elektronischen Vorrichtungen entsprechen.

3. Elektronische Vorrichtung nach Anspruch 1, wobei:
die ersten Nutzungsmusterinformationen Nutzungsmusterinformationen des ersten Benutzers umfassen, auf die basierend auf dem bestimmten ANN-Algorithmus eine dem ersten Benutzer entsprechende Gewichtung angewendet wurde, und
die zweiten Nutzungsmusterinformationen Nutzungsmusterinformationen des zweiten Benutzers umfassen, auf die basierend auf dem bestimmten ANN-Algorithmus eine dem zweiten Benutzer entsprechende Gewichtung angewendet wurde.

4. Elektronische Vorrichtung nach Anspruch 1, wobei der Prozessor konfiguriert ist zum:
Bestimmen mindestens einer externen elektronischen Vorrichtung, die zu der einen oder den mehreren externen elektronischen Vorrichtungen gehört und in der Lage ist, den ersten bestimmten Vorgang auszuführen, als die erste bestimmte elektronische Vorrichtung, und
Bestimmen mindestens einer externen elektronischen Vorrichtung, die sich von der ersten bestimmten elektronischen Vorrichtung unterscheidet, zu der einen oder den mehreren externen elektronischen Vorrichtungen gehört und in der Lage ist, den zweiten bestimmten Vorgang auszuführen, als die zweite bestimmte elektronische Vorrichtung.

5. Elektronische Vorrichtung nach Anspruch 1, wobei der Prozessor konfiguriert ist zum Bestimmen der ersten bestimmten elektronischen Vorrichtung aus einer Vielzahl von externen elektronischen Vorrichtungen basierend zumindest auf den ersten Nutzungsmusterinformationen und zum Bestimmen der zweiten bestimmten elektronische Vorrichtung aus der Vielzahl von externen elektronischen Vorrichtungen basierend zumindest auf den zweiten Nutzungsmusterinformationen, basierend auf der Vielzahl von externen elektronischen Vorrichtungen der einen oder mehreren externen elektronischen Vorrichtungen, die dem ersten bestimmten Vorgang oder dem zweiten bestimmten Vorgang entsprechen.

6. Elektronische Vorrichtung nach Anspruch 1, wobei der erste bestimmte Vorgang und der zweite bestimmte Vorgang dieselbe Funktion erfüllen.

7. Elektronische Vorrichtung nach Anspruch 1, wobei der Prozessor so konfiguriert ist, dass er eine Benachrichtigung bereitstellt, um zu identifizieren, ob die Steuerung der einen oder der mehreren externen elektronischen Vorrichtungen durch den Benutzer basierend auf der Nichtzugehörigkeit des Benutzers zu einem des ersten und zweiten Benutzers erlaubt wurde.

8. Verfahren, umfassend:
als Reaktion auf das Empfangen von Sprachdaten, die unter Verwendung des Mikrofons erhaltene Phoneminformationen umfassen, Identifizieren eines einzelnen Benutzers aus einer Vielzahl von registrierten Benutzern, denen es gestattet ist, die eine oder die mehreren externen elektronischen Vorrichtungen zu steuern, als einen ersten Benutzer oder einen zweiten Benutzer, wobei der einzelne Benutzer aus der Vielzahl von registrierten Benutzern basierend zumindest auf den Sprachdaten, die die unter Verwendung eines Mikrofons erhaltenen Phoneminformationen umfassen, und in einem Speicher (130) gespeicherten Audioinformationen für jeden der Vielzahl von registrierten Benutzern identifiziert wird;
Identifizieren einer Richtung, in die der identifizierte einzelne Benutzer blickt, basierend auf einer Pupillenbewegung des einzelnen Benutzers;
wenn der einzelne Benutzer als der erste Benutzer identifiziert wird:
Identifizieren erster Nutzungsmusterinformationen, die dem ersten Benutzer entsprechen, basierend auf einem bestimmten Algorithmus eines künstlichen neuronalen Netzwerkes, ANN, der der Vielzahl von registrierten Benutzern entspricht;
Identifizieren einer ersten bestimmten elektronischen Vorrichtung, die zu der einen oder den mehreren externen elektronischen Vorrichtungen gehört und den PhonemInformationen entspricht, basierend auf den identifizierten ersten Nutzungsmusterinformationen und der Richtung, in die der erste Benutzer blickt;
Bestimmen, wenn es eine Vielzahl der ersten bestimmten elektronischen Vorrichtung gibt, der nächstgelegenen elektronischen Vorrichtung unter der Vielzahl der ersten bestimmten elektronischen Vorrichtung basierend auf einer Position des ersten Benutzers als die erste bestimmte elektronische Vorrichtung; und
Steuern, über ein Kommunikationsmodul, der ersten bestimmten elektronischen Vorrichtung, um einen ersten bestimmten Vorgang entsprechend den Phoneminformationen durchzuführen, und
wenn der einzelne Benutzer als der zweite Benutzer identifiziert wird:
Identifizieren zweiter Nutzungsmusterinformationen, die dem zweiten Benutzer entsprechen, basierend auf dem bestimmten ANN-Algorithmus;
Identifizieren einer zweiten bestimmten elektronischen Vorrichtung, die zu der einen oder den mehreren externen elektronischen Vorrichtungen gehört und den Phoneminformationen entspricht, basierend auf den identifizierten zweiten Nutzungsmusterinformationen und der Richtung, in die der zweite Benutzer blickt;
Bestimmen, wenn es eine Vielzahl der zweiten bestimmten elektronischen Vorrichtung gibt, der nächstgelegenen elektronischen Vorrichtung unter der Vielzahl der zweiten bestimmten elektronischen Vorrichtung basierend auf einer Position des zweiten Benutzers als die zweite bestimmte bestimmte elektronische Vorrichtung; und
Steuern, über ein Kommunikationsmodul, der zweiten bestimmten elektronischen Vorrichtung, so dass sie einen zweiten bestimmten Vorgang durchführt, der den Phoneminformationen entspricht,
wobei die ersten Nutzungsmusterinformationen und die zweiten Nutzungsmusterinformationen mindestens eines von Folgendem enthalten: Informationen über eine Häufigkeit, mit der jede externe elektronische Vorrichtung benutzt wird, Informationen über eine Zeit, zu der die externe elektronische Vorrichtung benutzt wird, Informationen über eine häufiger benutzte externe elektronische Vorrichtung, wenn ein identischer Typ externer elektronischer Vorrichtungen enthalten ist, Informationen, die sich auf einen Benutzer beziehen, Informationen über eine von dem Benutzer bevorzugte externe elektronische Vorrichtung, und Zeitinformationen und Wetterinformationen in Bezug auf die eine oder die mehreren externen elektronischen Vorrichtungen.

9. Verfahren nach Anspruch 8, ferner umfassend:
Bestimmen mindestens einer externen elektronischen Vorrichtung, die zu der einen oder den mehreren externen elektronischen Vorrichtungen gehört und in der Lage ist, den ersten bestimmten Vorgang auszuführen, als die erste bestimmte elektronische Vorrichtung; und
Bestimmen mindestens einer externen elektronischen Vorrichtung, die sich von der ersten externen Vorrichtung unterscheidet, zu der einen oder den mehreren externen elektronischen Vorrichtungen gehört und in der Lage ist, den zweiten bestimmten Vorgang auszuführen, als die zweite bestimmte elektronische Vorrichtung.

10. Verfahren nach Anspruch 8, ferner umfassend:
basierend auf einer Vielzahl von externen elektronischen Vorrichtungen der einen oder der mehreren externen elektronischen Vorrichtungen, die dem ersten bestimmten Vorgang oder dem zweiten bestimmten Vorgang entsprechen,
Bestimmen der ersten bestimmten elektronischen Vorrichtung aus der Vielzahl von externen elektronischen Vorrichtungen basierend zumindest auf den ersten Nutzungsmusterinformationen, und
Bestimmen der zweiten bestimmten elektronischen Vorrichtung aus der Vielzahl von externen elektronischen Vorrichtungen basierend zumindest auf den zweiten Nutzungsmusterinformationen.

11. Verfahren nach Anspruch 8, wobei der erste bestimmte Vorgang und der zweite bestimmte Vorgang dieselbe Funktion erfüllen.

12. Verfahren nach Anspruch 8, ferner umfassend Bereitstellen einer Benachrichtigung zur Identifizierung, ob die Steuerung der einen oder der mehreren externen elektronischen Vorrichtungen, die dem Benutzer entsprechen, basierend auf der Nichtzugehörigkeit des Benutzers zum ersten Benutzer und/oder zum zweiten Benutzer erlaubt ist.

## Revendications

1. Dispositif électronique (101, 710) comprenant :
une mémoire (130) ;
une caméra (180) configurée pour identifier un mouvement de pupille d'un utilisateur unique ;
un microphone (150) ;
un module de communication (190) comprenant un circuit de communication configuré pour être connecté avec un ou plusieurs dispositifs électroniques externes ; et
un processeur (120), dans lequel le processeur est configuré pour :
en réponse à la réception de données vocales comprenant des informations de phonème obtenues à l'aide du microphone, identifier l'utilisateur unique parmi une pluralité d'utilisateurs enregistrés autorisés à commander l'un ou les plusieurs dispositifs électroniques externes en tant que premier utilisateur ou deuxième utilisateur, l'utilisateur unique étant identifié parmi la pluralité d'utilisateurs enregistrés au moins sur la base des données vocales comprenant les informations de phonème obtenues à l'aide du microphone, et des données audio stockées dans la mémoire (130) pour chacun de la pluralité d'utilisateurs enregistrés ;
identifier une direction dans laquelle l'utilisateur unique identifié regarde en se basant sur le mouvement de pupille de l'utilisateur unique ;
si l'utilisateur unique est identifié comme étant le premier utilisateur :
identifier des premières informations de schéma d'utilisation correspondant au premier utilisateur en se basant sur un algorithme de réseau neuronal artificiel, ANN, désigné correspondant à la pluralité d'utilisateurs enregistrés,
identifier un premier dispositif électronique désigné, appartenant à l'un ou les plusieurs dispositifs électroniques externes et correspondant aux informations de phonème, en se basant sur les premières informations de schéma d'utilisation identifiées et sur la direction dans laquelle le premier utilisateur regarde,
déterminer, lorsqu'il y a une pluralité du premier dispositif électronique désigné, le dispositif électronique le plus proche parmi la pluralité du premier dispositif électronique désigné, en se basant sur une position du premier utilisateur en tant que premier dispositif électronique désigné, et
commander, par l'intermédiaire du module de communication, le premier dispositif électronique désigné pour effectuer une première opération désignée correspondant aux informations de phonème ; et
si l'utilisateur unique est identifié comme étant le deuxième utilisateur :
identifier des deuxièmes informations de schéma d'utilisation correspondant au deuxième utilisateur en se basant sur l'algorithme ANN désigné,
identifier un deuxième dispositif électronique désigné, appartenant à l'un ou les plusieurs dispositifs électroniques externes et correspondant aux informations de phonème, en se basant sur les deuxièmes informations de schéma d'utilisation identifiées et sur la direction dans laquelle le deuxième utilisateur regarde,
déterminer, lorsqu'il y a une pluralité de deuxièmes dispositifs électroniques désignés, le dispositif électronique le plus proche parmi la pluralité de deuxièmes dispositifs électroniques désignés en se basant sur une position du deuxième utilisateur en tant que deuxième dispositif électronique désigné, et
commander, par l'intermédiaire du module de communication, au deuxième dispositif électronique désigné d'effectuer une deuxième opération désignée correspondant aux informations de phonème,
dans lequel les premières informations de schéma d'utilisation et les deuxièmes informations de schéma d'utilisation comprennent au moins l'un de ce qui suit : des informations sur la fréquence d'utilisation de chaque dispositif électronique externe, des informations sur le moment où le dispositif électronique externe est utilisé, des informations sur un dispositif électronique externe utilisé plus souvent si un type identique de dispositifs électroniques externes est compris, des informations relatives à un utilisateur, des informations sur un dispositif électronique externe préféré par l'utilisateur, et des informations de temps et des informations de météo en ce qui concerne l'un ou les plusieurs dispositifs électroniques externes.

2. Dispositif électronique de la revendication 1, dans lequel :
les premières informations de schéma d'utilisation comprennent des informations de schéma d'utilisation du premier utilisateur correspondant à l'un ou les plusieurs dispositifs électroniques externes, et
les deuxièmes informations de schéma d'utilisation comprennent des informations de schéma d'utilisation du deuxième utilisateur correspondant à l'un ou les plusieurs dispositifs électroniques externes.

3. Dispositif électronique de la revendication 1, dans lequel :
les premières informations de schéma d'utilisation comprennent des informations de schéma d'utilisation du premier utilisateur auxquelles un poids correspondant au premier utilisateur a été appliqué en se basant sur l'algorithme ANN désigné, et
les deuxièmes informations de schéma d'utilisation comprennent des informations de schéma d'utilisation du deuxième utilisateur auxquelles un poids correspondant au deuxième utilisateur a été appliqué en se basant sur l'algorithme ANN désigné.

4. Dispositif électronique de la revendication 1, dans lequel le processeur est configuré pour :
déterminer au moins un dispositif électronique externe, appartenant à l'un ou les plusieurs dispositifs électroniques externes et capable d'effectuer la première opération désignée, comme étant le premier dispositif électronique désigné, et
déterminer au moins un dispositif électronique externe différent du premier dispositif électronique désigné, appartenant à l'un ou les plusieurs dispositifs électroniques externes et capable d'effectuer la deuxième opération désignée, comme étant le deuxième dispositif électronique désigné.

5. Dispositif électronique de la revendication 1, dans lequel le processeur est configuré pour déterminer le premier dispositif électronique désigné d'une pluralité de dispositifs électroniques externes sur la base au moins des premières information de schéma d'utilisation et pour déterminer le deuxième dispositif électronique désigné de la pluralité de dispositifs électroniques externes sur la base au moins des deuxièmes informations de schéma d'utilisation, sur la base de la pluralité de dispositifs électroniques externes de l'un ou des plusieurs dispositifs externes correspondant à la première opération désignée ou à la deuxième opération désignée.

6. Dispositif électronique de la revendication 1, dans lequel la première opération désignée et la deuxième opération désignée exécutent une même fonction.

7. Dispositif électronique de la revendication 1, dans lequel le processeur est configuré pour fournir une notification permettant d'identifier si la commande par l'utilisateur de l'un ou des plusieurs dispositifs électroniques externes a été autorisé en se basant sur le fait que l'utilisateur n'appartient pas à l'un du premier utilisateur et du deuxième utilisateur.

8. Procédé, comprenant :
en réponse à la réception de données vocales comprenant des informations de phonème obtenues à l'aide du microphone, identifier l'utilisateur unique parmi une pluralité d'utilisateurs enregistrés autorisés à commander l'un ou les plusieurs dispositifs électroniques externes en tant que premier utilisateur ou deuxième utilisateur, l'utilisateur unique étant identifié parmi la pluralité d'utilisateurs enregistrés au moins sur la base des données vocales comprenant les informations de phonème obtenues à l'aide d'un microphone, et des données audio stockées dans une mémoire (130) pour chacun de la pluralité d'utilisateurs enregistrés ;
identifier une direction dans laquelle l'utilisateur unique identifié regarde en se basant sur un mouvement de pupille de l'utilisateur unique ;
si l'utilisateur unique est identifié comme étant le premier utilisateur :
identifier des premières informations de schéma d'utilisation correspondant au premier utilisateur en se basant sur un algorithme de réseau neuronal artificiel, ANN, désigné correspondant à la pluralité d'utilisateurs enregistrés ;
identifier un premier dispositif électronique désigné, appartenant à l'un ou les plusieurs dispositifs électroniques externes et correspondant aux informations de phonème, en se basant sur les premières informations de schéma d'utilisation identifiées et sur la direction dans laquelle le premier utilisateur regarde ;
déterminer, lorsqu'il y a une pluralité du premier dispositif électronique désigné, le dispositif électronique le plus proche parmi la pluralité du premier dispositif électronique désigné, en se basant sur une position du premier utilisateur en tant que premier dispositif électronique désigné ; et
commander, par l'intermédiaire d'un module de communication, le premier dispositif électronique désigné pour effectuer une première opération désignée correspondant aux information de phonème, et
si l'utilisateur unique est identifié comme étant le deuxième utilisateur :
identifier des deuxièmes informations de schéma d'utilisation correspondant au deuxième utilisateur en se basant sur l'algorithme ANN désigné ;
identifier un deuxième dispositif électronique désigné appartenant à l'un ou les plusieurs dispositifs électroniques externes et correspondant aux informations de phonème, en se basant sur les deuxièmes informations de schéma d'utilisation identifiées, et sur la direction dans laquelle le deuxième utilisateur regarde ;
déterminer, lorsqu'il existe une pluralité de deuxièmes dispositifs électroniques désignés, le dispositif électronique le plus proche parmi la pluralité de deuxièmes dispositifs électroniques désignés, en se basant sur la position du deuxième utilisateur en tant que deuxième dispositif électronique désigné ; et
commander, par l'intermédiaire d'un module de communication, le deuxième dispositif électronique désigné pour effectuer une deuxième opération désignée correspondant aux informations de phonème,
dans lequel les premières informations de schéma d'utilisation et les deuxièmes informations de schéma d'utilisation comprennent au moins l'un de ce qui suit : des informations sur la fréquence d'utilisation de chaque dispositif électronique externe, des informations sur le moment où le dispositif électronique externe est utilisé, des informations sur un dispositif électronique externe utilisé plus souvent si un type identique de dispositifs électroniques externes est compris, des informations relatives à un utilisateur, des informations sur un dispositif électronique externe préféré par l'utilisateur, et des informations de temps et des informations de météo en ce qui concerne l'un ou les plusieurs dispositifs électroniques externes.

9. Procédé de la revendication 8, comprenant en outre :
déterminer qu'au moins un dispositif électronique externe appartenant à l'un ou les plusieurs dispositifs électroniques externes et capable d'effectuer la première opération désignée, est le premier dispositif électronique désigné ; et
déterminer qu'au moins un dispositif électronique externe différent du premier dispositif externe, appartenant à l'un ou les plusieurs dispositifs électroniques externes et capable d'effectuer la deuxième opération désignée, est le deuxième dispositif électronique désigné.

10. Procédé de la revendication 8, comprenant en outre :
en se basant sur une pluralité de dispositifs électroniques externes de l'un ou des plusieurs dispositifs électroniques externes correspondant à la première opération désignée ou à la deuxième opération désignée,
déterminer le premier dispositif électronique désigné de la pluralité de dispositifs électroniques externes en se basant au moins sur les premières informations de schéma d'utilisation, et
déterminer le deuxième dispositif électronique désigné parmi la pluralité de dispositifs électroniques externes, en se basant au moins sur les deuxièmes informations de schéma d'utilisation.

11. Procédé de la revendication 8, dans lequel la première opération désignée et la deuxième opération désignée exécutent une même fonction.

12. Procédé de la revendication 8, comprenant en outre la fourniture d'une notification permettant d'identifier si la commande de l'un ou des plusieurs dispositifs électroniques externes correspondant à l'utilisateur est autorisée en se basant sur le fait que l'utilisateur n'appartient pas au premier utilisateur et/ou au deuxième utilisateur.
